# EUROPÄISCHE PATENTANMELDUNG

(11) **EP 2 818 273 A1**
(43) Veröffentlichungstag der Anmeldung: **31.12.2014**
(21) Anmeldenummer: 13173861.9
(22) Anmeldetag: 26.06.2013
(51) Int. Cl.: B23K 37/053, B23K 37/04

(54) **Schweißtisch**

(71) Anmelder: Günes Pili Ltd Sti, 42100 Selcuklu, Konya (TR)
(72) Erfinder: Arslan, Kemal, 35447 Reiskirchen (DE)
(74) Vertreter: Simandi, Claus

(57) **Zusammenfassung**

Die vorliegende Erfindung betrifft einen Schweißtisch, auf dem zwei Werkstücke miteinander verbunden werden können. Insbesondere geht es um einen Schweißtisch (10) zur Bearbeitung von Langstücken, welche eine Längsachse aufweisen, wobei der Schweißtisch (10) eine erste Führung (16) für Langstücke aufweist, welche das Drehen des Langstückes um eine Rotationsachse, z.B. die Längsachse, erlaubt, und wobei der Schweißtisch (10) ferner eine zweite Führung (20) für Langstücke aufweist, welche einen Anpressdruck auf das Langstück ausübt, dadurch gekennzeichnet, dass die erste Führung (16) oder die zweite Führung (20) eine Kraft auf das Langstück ausüben kann, deren eine Komponente senkrecht zur Rotationsachse und tangential in Richtung einer Rotation um die Rotationsachse gerichtet ist und deren andere Komponente parallel zur Rotationsachse gerichtet ist. Die Erfindung betrifft auch ein korrespondierendes Verfahren.

## Beschreibung

### Gebiet der Erfindung

Die vorliegende Erfindung betrifft einen Schweißtisch, auf dem in einfacher und effizienter Weise zwei Werkstücke miteinander verbunden werden können. In einem weiteren Aspekt betrifft die Erfindung auch ein Verfahren zum effizienten Verbinden zweier Werkstücke, welches sogar als teilautomatisiertes Verfahren ausgeführt werden kann.

### Hintergrund der Erfindung

Die Patentschrift 2 239 619 der Firma Dornier System GmbH aus Friedrichshafen offenbart eine Vorrichtung zum Aufnehmen und zum gegenseitigen Zentrieren und Spannen einer Kugel und einer Welle für das Anschweißen der Kugel an eine Stirnfläche der Welle. Aus der Kugel und der Welle sollen in dieser Weise Stehlager hergestellt werden. Es ist aber erkennbar, dass das Verfahren mit entsprechenden Abwandlungen auch zur Verbindung ähnlicher, aber etwas anderer Werkstücke geeignet ist. Bei der Vorrichtung sind in axialer Richtung verschiebbare Spannwellen vorgesehen, die die zu verbindenden Werkstücke aufnehmen können. Diese Spannwellen können durch Antriebsmittel gedreht werden. Neben den Vorrichtungen für den eigentlichen Schweißvorgang, welcher an sich schon automatisch ablaufen kann, also neben der Aufnahme und Zentriervorrichtung, sind auch Vorrichtungen zum automatischen Auswerfen der verschweißten Teile vorgesehen. Das Auswerfen kann beispielsweise durch Druckbeaufschlagung geschehen. Weiterhin ist eine automatische Zuführung der Teile vorgesehen. Dazu ist eine Aufnahmetrommel mit Längsnuten vorgesehen, die sowohl Wellen als auch Kugeln aus entsprechenden getrennten Magazinen aufnehmen können. Insgesamt werden also ein aufwendiger Prozess und eine aufwendige Vorrichtung offenbart, welche aber eine große Anzahl von Werkstücken in vollautomatischer Weise verbinden können.

Die Offenlegungsschrift 2 217 304 der Röwac Anton Röser elektrotechnische Fabrik aus Stuttgart offenbart eine andere Schweißvorrichtung. Diese Schweißvorrichtung umfasst einen Rundschweißdrehtisch. Dieser Rundschweißdrehtisch ist mit einem Gestell verbunden, so dass er in verschiedene Lagen, auch in eine Schräglage, gebracht werden kann. Das Werkstück selbst ist durch den mit dem Rundschweißdrehtisch verbundenen Motor angetrieben. Gegenüber von dem Drehteller des Rundschweißdrehtisches können weitere Führungen vorgesehen sein. Ferner soll die Schweißvorrichtung Halterungen für mindestens einen Schweißbrenner umfassen. Die vorgestellte Schweißvorrichtung erlaubt sicher einen effizienten Schweißvorgang, jedoch sind für jedes Werkzeug viele Schritte manuell auszuführen und das Einspannen des Werkstückes und das Entnehmen erfordern einigen Zeitaufwand. In jedem Fall sind die Halte- und Führungselemente der Schweißvorrichtung genau an das einzelne Werkstück anzupassen.

Die vorliegende Erfindung strebt es an, diesen Stand der Technik zu verbessern. Insbesondere soll ein Schweißtisch und ein Verfahren angeboten werden, durch welche ein effizientes Arbeiten möglich ist, ohne dass aber erhebliche Investitionen zu tätigen sind und ohne dass die Vorrichtung im Wesentlichen nur für genau festgelegte Typen von zu verbindenden Werkstücken geeignet ist.

### Nähere Beschreibung der Erfindung

Diese Aufgabe wird in Bezug auf den Schweißtisch durch den Gegenstand des Anspruches 1 gelöst.

Der Begriff "Schweißtisch" soll im Sinne der vorliegenden Erfindung allgemein im Sinne einer Schweißvorrichtung oder einer Hilfsvorrichtung zum Schweißen verstanden werden. Es kommt beispielsweise in Frage, dass diese Schweißvorrichtung keine eigenen Tischbeine aufweist, sondern als Aufsatz für einen Tisch oder einer Werkbank oder dergleichen benutzt wird. Da die Vorrichtung im Allgemeinen tischähnlich ist, oder als Tischaufsatz zusammen mit einem Untergestell den Eindruck eines Schweißtisches erweckt, wird jedoch hier im ganz allgemeinen Sinne von einem Schweißtisch gesprochen. Zu beachten ist dabei durchaus auch, dass ein Schweißgerät zwar fest mit dem Schweißtisch verbunden sein kann, aber der Schweißtisch seine Aufgabe auch dann erfüllt, wenn ein Schweißgerät oder ein anderes Gerät zum Verbinden zweier Werkstücke lose und unabhängig von dem Schweißtisch benutzt wird.

Ebenfalls wird hierin von Langstücken geredet. Der Begriff soll ganz allgemein als Bezeichnung für ein Werkstück verstanden werden. Der Schweißtisch ist besonders geeignet für längliche Werkstücke. Daher wird anschaulich von Langstücken gesprochen. Ein solches Langstück hat drei Hauptachsen, von denen eine deutlich die längste ist. Zum Beispiel kann es sich um ein Rohr handeln. Bei einem solchen Rohr wäre dann die Achse, welche durch den Mittelpunkt von ringförmigen Rohrabschnitten verläuft, die Längsachse. Der Schweißtisch wird im Zusammenhang mit solchen Langstücken beschrieben, die Langstücke oder Werkstücke sind jedoch nicht Teil der Erfindung.

Der Schweißtisch soll eine erste Führung aufweisen. Diese Führung soll das Drehen eines Langstückes um eine Rotationsachse erlauben. Die Rotationsachse ist in der Regel auch die Längsachse des Langstücks. Eine solche Führung kann zweckmäßigerweise in verschiedenen Formen ausgeführt werden. Dabei sollte die Beweglichkeit des Langstückes in mindestens eine Richtung beschränkt werden, während seine Rotation ungehindert möglich ist. Zu diesem Zweck können Winkel oder Profile, die auf einem Werkbankabschnitt angebracht sind, nützlich sein. Zweckmäßigerweise wird die erste Führung Rollen oder Walzen umfassen. Besonders zweckmäßig sind Rollen- oder Walzenpaare, welche mit parallelen Achsen in einem geringen Abstand voneinander angeordnet sind. Bei Nutzung des Schweißtisches für Rohre mit Durchmessern von 2 - 15 cm ist beispielsweise ein Achsabstand zwischen 5 und 30 cm zweckmäßig. Das Langstück wird dann zwischen den Achsen der gegenüberliegenden Rollen oder Walzen zentriert aufgelegt und kann sich von den gegenüberliegenden Rollen oder Walzen gestützt gut um seine Längsachse drehen. Je nach Länge des Langstückes ist es zweckmäßig, mehrere Rollen- oder Walzenpaare entlang der Längsachse verteilt vorzusehen.

Ferner soll der Schweißtisch eine zweite Führung umfassen. Diese zweite Führung soll geeignet sein, einen Anpressdruck auf das Langstück auszuüben. Der Anpressdruck kann durch das Eigengewicht der zweiten Führung entstehen. Zweckmäßig ist es, den Anpressdruck zu erhöhen, indem dazu beispielsweise der Druck aus einer Feder verwendet wird. Zu diesem Zweck sind neben mechanischen Federn auch Gasdruckfedern zweckmäßig. Da die zweite Führung Druck im Wesentlichen aus einer Richtung auf das Langstück ausübt, sollte ein Gegenlager vorhanden sein, so dass das Werkstück gehalten wird, sich aber nicht oder nicht wesentlich wegbewegt. Dieser Gegendruck wird zweckmäßigerweise durch die erste Führung aufgebracht. Wenn beispielsweise die erste Führung mindestens ein Rollenpaar umfasst, so legen die Achsen des Rollenpaares eine Unterstützungsebene fest. Die zweite Führung wird dann zweckmäßigerweise einen Druck ausüben, der im Wesentlichen senkrecht auf dieser Unterstützungsebene steht. Die Richtung muss aber nicht genau senkrecht sein. Ein Winkel von 0 - 30 Grad oder 10 - 20 Grad relativ zur Senkrechten auf der beschriebenen Unterstützungsebene ist durchaus noch zweckmäßig.

Es hat sich als nützlich erwiesen, wenn die zweite Führung auch mindestens eine Rolle oder Walze aufweist. In dieser Weise kann die zweite Führung auch auf ein an sich drehendes Langstück fortwährend Druck ausüben. Die zweite Führung kann aber auch zwei oder mehr Rollen oder Walzen aufweisen. Zweckmäßigerweise liegen deren Achsen auf einer Geraden. Zweckmäßig ist, wenn der Scheißtisch einen Antrieb aufweist. Bei einem antriebslosen Schweißtisch wäre die manuelle Drehung von Werkstücken denkbar, die bei entsprechenden optischen oder akustischen Signalen sogar eine Art eines halbautomatischen Prozesses ermöglichen könnte. Ein Antrieb kann unabhänig von der ersten und zweiten Führung vorgesehen sein, er kann jedoch auch mit der ersten oder zweiten Führung kombiniert werden. Vorteilhaft ist, wenn mindestens eine Führung angetriebene Rollen oder Walzen aufweist.

Zweckmäßig ist, wenn die erste oder die zweite Führung einen Antrieb aufweist, welcher eine Kraft auf das Langstück ausübt. Besonders vorteilhaft ist dies bei der zweiten Führung. Diese Kraft soll in zwei Komponenten zerlegbar sein. Dabei soll eine erste Komponente senkrecht zur Längsachse und tangential in Richtung einer Rotation um die Längsachse gerichtet sein. Diese Kraftkomponente bewirkt also die Rotation des Langstückes um seine Längsachse. Eine weitere Komponente soll parallel zur Längsachse gerichtet sein. Diese Komponente wäre also geeignet, ein widerstandsfrei bewegliches Langstück entlang seiner Längsachse in eine Richtung zu verschieben, beispielsweise nach links oder nach rechts.

Die Komponente parallel zur Längsachse ist zweckmäßigerweise kleiner als die andere Komponente, beispielsweise kann sie zwischen 5 und 30%, z. B. zwischen 10 und 20% der ersten Komponente betragen. Es wird also nur eine relativ geringe Kraft entlang der Längsachse aufgewendet.

Das Langstück wird durch die erste Führung geführt. Durch den Kontakt mit mindestens einem Element der ersten Führung ist das Langstück daher nicht widerstandsfrei beweglich. Die Größe der zweiten Komponente kann nun so gewählt werden, dass sich das Langstück wegen eines solchen Widerstandes nicht oder nur geringfügig entlang seiner Längsachse bewegt. Die Komponente kann bewirken, dass sich das Langstück sogar dann nicht bewegt, wenn eine äußere Kraft entgegen der Wirkrichtung dieser Komponente wirkt. Eine solche äußere Kraft kann beispielsweise beim Bearbeiten des Langstückes aufgebracht werden. Das Zusammenwirken der beiden Führungen sorgt also dafür, dass die Ausrichtung der Rotationsachse des Langstückes erhalten bleibt, dass ferner eine Rotation um die Rotationsachse möglich ist, und das drittens die Position des Langstückes auch dann erhalten bleiben kann, wenn ein äußerer Druck entlang der Rotationsachse auf das Langstück einwirkt.

Um in der beschriebenen Weise insbesondere mit der zweiten Führung eine Kraft auf das Langstück auszuüben ist es zweckmäßig, Rollen vorzusehen, welche schräg zur Längsachse des Langstückes stehen. Dabei ist eine leichte Schrägstellung gegenüber der Richtung der Rotationsachse zweckmäßig, so dass die Achse der mindestens einen Rolle mit der Rotationsachse ein Winkel zwischen 3 und 30 Grad, zweckmäßigerweise meist zwischen 8 und 20 Grad bildet. Die entsprechenden Kraftkomponenten lassen sich aber auch in anderer Weise erzeugen. Beispielsweise könnten zwei verschieden ausgerichtete Rollen eingesetzt werden. Eine erste Rolle würde dabei eine Kraft ausüben, welche allein die Rotation des Langstückes um seine Längsachse bewirkt, während eine zweite Rolle eine Kraft entlang der Längsachse des Langstückes ausübt.

Zu beachten ist aber, dass sich diese vorteilhaften Effekte auch dann erzielen lassen, wenn die zweite Führung nicht angetrieben ist. Dann kann beispielsweise der Antrieb durch die erste Führung oder eine zusätzlich dritte Führung oder dergleichen bewirkt werden.

Möglich ist aber auch, dass nicht die zweite Führung, sondern die erster Führung eine Kraftkomponente parallel zu Rotationsachse eines Langstücks erzeugt. Dies ist durch eine geeigneten Schrägstellung von Rollen oder Walzen der zweiten Führung erreichbar.

Wenn in der beschriebenen Weise die zweite Führung Rollen aufweist, so sollten diese so gewählt werden, dass ein guter Reibungsschluß mit der Oberfläche eines Langstückes erreicht wird. Für Werkstücke aus Metall, beispielsweise aus Edelstahl, haben sich Rollen aus Hartgummi bewährt. Besonders zweckmäßig sind dabei Rollen mit einem Bogenprofil, d. h. Rollen, deren mittiger Durchmesser am größten ist, und deren Durchmesser nach außen hin abfällt.

Für die erste Führung werden zweckmäßigerweise andere Rollen verwendet, nämlich Rollen mit einer ebenen Auflagenfläche. Der Durchmesser einer solchen Rolle ist also über die ganze Breite der Rolle identisch. Dadurch wird ein besserer Kontakt mit dem Langstück gewährleistet. Insbesondere bewirkt der gute Kontakt solcher Rollen mit dem Langstück, dass ein gewisser Widerstand gegen seine Verschiebung entlang der Längsachse erzeugt wird.

Die Erfindung lässt sich dann besonders nutzbringend einsetzen, wenn in einer Weiterbildung der Erfindung an einem Ende des Schweißtisches ein Anstoß vorgesehen ist. Dieser Anstoß soll ein Werkstück zusätzlich fixieren. Beispielsweise kann der Anstoß das Langstück an einem Ende fixieren und so seine Verschiebung entlang seiner Längsachse zusätzlich begrenzen. Der Anstoß kann auch ein mit dem Langstück zu verbindendes Werkstück halten und fixieren. Vorzugsweise wird der Anstoß also so ausgeführt, dass er die durch die erste Führung gegebene Bewegungsfreiheit des Langstückes zusätzlich einschränkt. Zweckmäßigerweise weist der Anstoß für den Schweißtisch in Verlängerung der Rotationsachse eine Anstoßfläche auf. Der Anstoß kann zweckmäßigerweise auch als Spannstempel ausgeführt werden. Vorzugsweise weist der Anstoß einen Kontaktstift auf und eine Halterung für den Kontaktstift. Eine solche Halterung kann beispielsweise in der Form eines konventionellen Bohrfutters ausgeführt sein.

Der Spannstempel sollte in Verlängerung der Rotationsachse liegen. Wenn der Berührungspunkt mit einem rotierenden Werkstück auf der Rotationsachse liegt, wird die Rotation nur minimal gehemmt.

Zu beachten ist, dass die Bezeichnung Spannstempel nicht auf einen Teil einer konventionellen Einspannvorrichtung hindeutet. Im Sinne der vorliegenden Erfindung hat der Spannstempel kein Gegenlager. Vielmehr wird das Werkstück vorzugsweise nur einseitig durch einen Spannstempel oder ein ähnliches Bauteil gehalten. Die andere Seite des Schweißtisches ist offen. Dadurch können Werkstücke sehr unterschiedlicher Länge bequem eingespannt und bearbeitet werden. Die Kraftkomponente, die in Richtung der Rotationsachse auf den Spannstempel hin wirkt, ersetzt das Gegenlager.

Um den Schweißtisch auch für Schweißverfahren einsetzen zu können, bei denen eine Erdung mindestens eines Werkstückes sinnvoll ist, kann auch eine elektrische Kontaktvorrichtung mit mindestens einem Werkstück vorgesehen werden. Es ist üblich, eine solche Kontaktvorrichtung an einem zentralen Punkt, etwa auch über einen wesentlichen Teil der Länge des Langstückes vorzusehen. Im Rahmen der vorliegenden Erfindung wurde jedoch die Erkenntnis gewonnen, dass es häufig zweckmäßig oder sogar vorteilhaft ist, einen verlässlichen elektrischen Kontakt nur an einem Ende des Langstückes oder nur mit einem mit dem Langstück zu verbindenden Anschweißstück vorzusehen. Daher ist es vorteilhaft, eine elektrische Kontaktvorrichtung an dem Anstoß vorzusehen, mit welchem der Anstoß mit zur Erdung mit einem Schweißgerät verbunden werden kann. Diese elektrische Kontaktvorrichtung des Anstoßes ist dann elektrisch mit dem Kontaktstift oder allgemein mit einer Anstoßfläche zu verbinden. In dieser Weise sorgen die Fläche oder Stift sowohl für einen mechanischen als auch für einen elektrischen Kontakt.

Eine erste Führung, welche Rollen oder Walzen aufweist, ist besonders zweckmäßig für Langstücke mit rundem Durchmesser, beispielsweise für Röhren. Wenn ein Langprofil mit eckigem Querschnitt bearbeitet werden soll, kann es in Frage kommen, durch weitere Hilfsmittel diese für eine Führung mit Rollen vorzubereiten. Dazu kommen beispielsweise Manschetten in Frage, welche innen ein Langprofil mit eckigem Querschnitt gut aufnehmen können, und außen rund sind.

Es ist zweckmäßig, die zweite Führung beweglich, insbesondere schwenkbar auszuführen. So kann ein Werkstück auf den Schweißtisch aufgelegt werden, ohne dass die zweite Führung im Weg ist. Zu Beginn des Schweißvorganges kann dann die zweite Führung bewegt oder verschwenkt werden, so dass sie Kontakt mit dem Werkstück hat. Zweckmäßigerweise kann dies erreicht werden, indem eine Schwenkachse parallel zur Längsachse des aufzunehmenden Werkstückes vorgesehen wird, also in der Regel parallel zur Rotationsachse.

Die Erdung eines Werkstückes am Anstoß ist bislang nicht üblich und stellt einen wesentlichen eigenständigen Aspekt der Erfindung dar. Insofern betrifft die Erfindung auch einen Schweißtisch, welcher über eine Auflagefläche und eine Schweißgerätehalterung verfügt, ferner über einseitig offene Aufnahme für Langstück und einen Spannstempel, wobei der Spannstempel ist elektrisch leitend ausgeführt ist und einen Kontaktstift, eine Halterung und elektrische Kontakteinrichtung ausweist, und wobei der Schweißtisch ferner eine mechanische Andruckhilfe aufweist, welche auf Rotationsachse liegt. Die mechanische Andruckhilfe kann dabei einstückig mit dem Kontaktstift ausgeführt werden.

Die eingangs beschriebene Aufgabe wird auch durch ein Verfahren nach Anspruch 10 gelöst. So werden die beschriebenen Vorzüge der Erfindung ebenfalls verwirklicht.

Es geht dabei also um ein teilautomatisiertes Verfahren zum Verbinden eines Langstückes mit einem Anschweißstück, welcher folgende Schritte umfasst:
- Auflegen des Langstücks auf einen Schweißtisch, vorzugsweise auf Rollen, so dass das Langstück um seine Längsachse drehbar ist
- Manuelles Anlegen des Anschweißstückes an das Langstück
- Anheften des Anschweißstückes, vorzugsweise durch mindestens einen Schweißpunkt mit einem ersten Schweißgerät
- Erden des Langstücks oder des Anschweißstückes
- Fixieren des Anschweißstückes mit einem Spannstempel
- Anlegen mindestens einer Antriebsrolle durch Überführen in die Arbeitsposition, wobei die Antriebsrolle zwischen einer Ruheposition und einer Arbeitsposition beweglich ist
- Ausüben von Druck auf das Langstück durch die Antriebsrolle
- Legen einer Schweißnaht durch Einschalten des ersten oder eines zweiten Schweißgerätes und Rotation des Langstücks und des Anschweißstückes

Die aufgezählten Schritte werden vorzugsweise in der Reihenfolge ihrer Auflistung ausgeführt.

Der Schritt des Anheften des Anschweißstückes könnte auch durch eine andere Verbindungstechnik, beispielsweise Löten oder Kleben erfolgen. Schweißen ist allerdings am geläufigsten. Die Schweißart ist in der Regel dieselbe wie für den anschließenden Schweißschritt.

Daher ist in der Regel im beschriebenen Verfahren auch ein einziges, erstes Schweißgerät genügend.

Im Rahmen der vorliegenden Erfindung hat sich das Wolfram- Inerstgasschweißen (auch WIG-Schweißen) bewährt. Der Schweißtisch ist aber auch für andere Schweißtechniken gut einsetzbar, besonders für solche, bei welchen die Erdung von Werkstücken eine Rolle spielt.

Das Schweißgerät kann auch separat vom Schweißtisch zur Verfügung gestellt werden und erforderlichenfalls nur durch ein Erdungskabel mit dem Schweißtisch oder einem Werkstück verbunden werden. Das Schweißgerät kann auch lösbar oder unlösbar mit dem Schweißtisch verbunden sein. Dabei kommt es in Betracht, dass Schweißgerät ganz in den Tisch zu integrieren, z.B. in seinem Korpus unterzubringen.

Ähnlich wie das Wort "Langstück" wird das Wort "Anschweißstück" hier in einem allgemeinen Sinne für ein Werkstück verwendet. Im Einzelfall kann auch eine andere Verbindung auf die Verbindung durch Schweißen gewählt werden. Besonders interessant an diesem teilautomatisierten Verfahren ist, dass gewisse Schritte manuell ausgeführt werden. Daher ist das Verfahren sehr flexibel und kann für eine Vielzahl ganz unterschiedlich geformter und bemaßter Werkstücke eingesetzt werden. Zugleich werden Verfahrensschritte, welche manuell nur langsam auszuführen sind, mit Hilfe automatisierter Verfahrensschritte schnell und effektiv ausgeführt.

In einer Fortbildung des Verfahrens ist es zweckmäßig, ein Schweißstück mit einem Spannstempel zu fixieren. In dieser Weise wird eine Verschiebung des Langstückes mit angeheftetem Anschweißstift entlang der Längsachse des Langstückes vermieden. In einer weiteren Weiterbildung des Verfahrens würde zum Antrieb auch Druck in Richtung auf den Spannstempel ausgeübt. Dabei hat es sich als vorteilhaft erwiesen, wenn das Anschweißstück geerdet wird. Dies erlaubt den Einsatz von Schweißverfahren, welche eine Erdung erfordern. Dies kann auch mit Hilfe des Spannstempels erfolgen.

Es ist besonders zweckmäßig, wenn bei den Verfahren Rotationsgeschwindigkeit und Bearbeitungszeit unabhängig voneinander eingestellt werden können. In dieser Weise kann der Schweißtisch bequem für Werkstücke verschiedenen Umfangs und verschiedener Wanddicke benutzt werden. Ein Werkstück mit höherer Wanddicke erfordert eine längere Schweißzeit pro Längenabschnitt der Schweißnaht. Ein Werkstück mit großem Durchmesser erfordert eine insgesamt längere Schweißnaht. Nur wenn die Schweißzeit und die Rotationsgeschwindigkeit unabhängig voneinander eingestellt werden können, können beide Erfordernisse zweckmäßig berücksichtigt werden. In dieser Weise ist der Schweißtisch also flexibel einsetzbar für Werkstücke verschiedener Abmessung, insbesondere für Werkstücke verschiedenen Umfangs und verschiedener Wanddicke.

In einer ebenfalls nützlichen Weiterbildung des Verfahrens ist die automatische Abschaltung des Schweißvorganges vorgesehen. Dadurch wird erreicht, dass der Bediener nur am Anfang des Schweißvorganges aktiv werden muss und danach nicht mehr eingreifen muss, sondern allenfalls noch den Vorgang kontrollieren. Alternativ kann beispielsweise ein Abschaltsignal gegeben, die Abschaltung aber dann durch einen Bediener erfolgen.

Weitere Merkmale, aber auch Vorteile der Erfindung, ergeben sich aus den nachfolgend aufgeführten Zeichnungen und der zugehörigen Beschreibung. In den Abbildungen und in den dazugehörigen Beschreibungen sind Merkmale der Erfindung in Kombination beschrieben. Diese Merkmale können allerdings auch in anderen Kombinationen von einem erfindungsgemäßen Gegenstand umfasst werden. Jedes offenbarte Merkmal ist also auch als in technisch sinnvollen Kombinationen mit anderen Merkmalen offenbart zu betrachten. Bei den (teilweise leicht vereinfachten, schematischen) Abbildungen zeigen:
- Fig. 1: zeigt in perspektivischer Gesamtansicht einen Schweißtisch im Sinne der vorliegenden Erfindung;
- Fig. 2: zeigt Details der zweiten Führungseinrichtung des Schweißtisches;
- Fig. 3: zeigt im Detail die Arbeitsfläche des Schweißtisches;
- Fig. 4: zeigt eine Konstruktionsskizze für einen Korpus für den Schweißtisch;
- Fig. 5: zeigt als Konstruktionsskizze für einen Deckel für den Korpus des Schweißtisches;
- Fig. 6: zeigt als Konstruktionsansichten eine perspektivische Ansicht eines Gehäuses für die zweite Führung des Schweißtisches;
- Fig. 7: zeigt neben Konstruktionsansichten eine untere Ansicht eines Gehäuses für die zweite Führung des Schweißtisches;
- Fig. 8: zeigt zweckmäßige Rollen zur Verwendung im Zusammenhang mit der vorliegenden Erfindung.

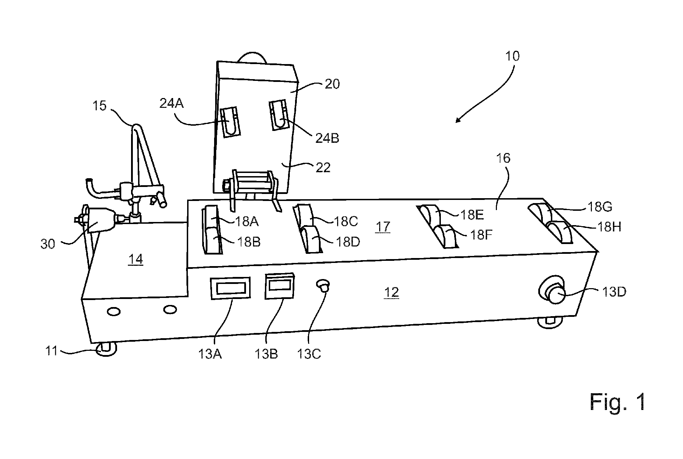

Fig. 1 zeigt eine Gesamtansicht einer Ausführungsform eines Schweißtisches 10. Als zentrales Element verfügt der Schweißtisch 10 über einen Korpus 12, der annähernd quaderförmig ist. Der Korpus 12 weist also eine Vorderseite, eine Rückseite, eine linke und eine rechte Seitenfläche auf sowie eine Unterseite und einen Deckel. Auf diese Elemente wird im Zusammenhang auf die nachfolgenden Figuren noch näher eingegangen.

In Fig. 1 ist ein Schweißtisch 10 gezeigt, unter dessen Korpus 12 kurze Füße 11 angebracht sind. Mit diesen Füßen 11 kann der Schweißtisch 10 bequem auf eine Werkbank gestellt werden. Die Füße 11 können auch einen Niveauausgleich für den Korpus 12 bewirken, sollte die Werkbank nicht ganz eben stehen. Es ist ebenso möglich, statt der kurzen Füße 11 längere Füße vorzusehen, so dass der Schweißtisch 10 auch unabhängig von einer Werkbank aufgestellt werden kann.

An der Vorderseite des Schweißtisches 10 erkennt man Anzeige- und Bedienelemente. Bei den Elementen 13A und 13B handelt es sich um Anzeigeelemente. Dort könnte z. B. die Umdrehungsgeschwindigkeit eines Werkstückes oder die verbleibende Bearbeitungszeit angezeigt werden. Bei den Elementen 13C und 13D handelt es sich um Bedienelemente. Element 13C könnte beispielsweise ein Einstellknopf für die Umdrehungsgeschwindigkeit sein. Element 13D kann ein Notausschalter sein.

An der Oberseite des Korpuses 12 befindet sich auf der linken Seite die Arbeitsfläche 14. Im Bereich dieser Arbeitsfläche 14 findet der eigentliche Schweißvorgang statt. Die Arbeitsfläche 14 selbst muss dabei jedoch nicht als Werkbankfläche eingesetzt werden, da das Werkstück oberhalb von der Arbeitsfläche 14 gehalten wird. Sie kann jedoch eine praktische Ablagefläche darstellen. In diesem Bereich befindet sich insbesondere der Haltearm 15 für eine Schweißvorrichtung, meist zweckmäßigerweise für eine Schweißpistole. Das Schweißgerät kann dementsprechend separat von dem Schweißtisch 10 positioniert sein. Es kommt aber auch in Frage, wesentliche Elemente des Schweißgerätes in den Schweißtisch 10, also vorzugsweise in seinen Korpus 12, zu integrieren. Eine Verbindung zwischen Schweißgerät und einer Schweißpistole könnte dann durch das Innere des Haltearmes 15 verlaufen.

Rechts von der Arbeitsfläche 14 befindet sich die erste Führung 16. Diese erste Führung 16 umfasst in dieser Ausführungsform eine Stützfläche 17. Das Werkstück muss diese Stützfläche 17 jedoch nicht berühren. Es kommen daher auch Ausführungen in Betracht, bei denen keine solche Stützfläche 17 vorgesehen ist, bei denen also der Korpus 12 beispielsweise nach oben offen ist. Als wichtige Elemente zur Führung eines Werkstückes weist die erste Führung 16 vier Rollenpaare auf. Es können auch mehr oder weniger Rollen zum Einsatz kommen. Das linke Rollenpaar ist besteht aus einer ersten Führungsrolle 18A und einer davor mit paraller Achse angeordneten zweiten Führungsrolle 18B. Neben den Führungsrollen 18A und 18B sind weitere Führungsrollen 18C, 18D sowie 18E und 18F sowie 18G und 18H angeordnet. Die Achsen der Führungsrollen stehen parallel und sind auch parallel zur Rotationsachse eines Werkstückes ausgerichtet. Die Achsen der übrigen Führungsrollen sind ebenfalls parallel zur Rotationsachse eines Werkstückes ausgerichtet.

Ferner ist eine zweite Führung 20 für das Werkstück vorgesehen. Diese zweite Führung 20 ist an einem separaten Gehäuse 22 untergebracht. Das Gehäuse 22 ist beweglich zum Korpus 12 des Schweißtisches 10 angebracht. Die zweite Führung 20 enthält Antriebsrollen, nämlich eine erste Antriebsrolle 24A und eine zweite Antriebsrolle 24B. Die Achsen beider Antriebsrollen liegen auf einer Linie.

Als weiteres Element weist der Schweißtisch 10 an seiner linken Seite, also im Bereich der Arbeitsfläche 14 und benachbart zum Haltearm 15, für ein Schweißgerät einen Spannstempel 30 auf. Dieser Spannstempel 30 wirkt einer Verschiebung eines Werkstückes nach links entgegen. Seine Elemente werden in den nachfolgenden Abbildungen noch näher erläutert werden.

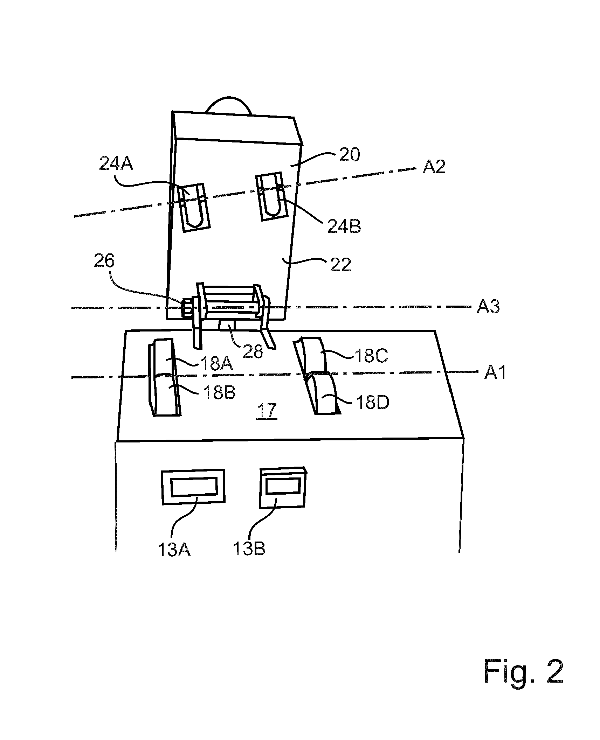

Fig. 2 zeigt einen vergrößerten Ausschnitt aus Fig. 1. Hier sind Elemente der ersten und der zweiten Führung besonders deutlich erkennbar. Das Rollenpaar 18A und 18B sowie das benachbarte Rollenpaar 18C und 18D legen eine Rotationsachse A1 für ein Werkstück fest. Diese Rotationsachse A1 verläuft in Längsrichtung des Schweißtisches 10. Verschwenkbar zum Korpus 12 des Schweißtisches 10 ist das Gehäuse 22 der zweiten Führung 20 angebracht. In der gezeigten Ausführungsform weist es zwei Antriebsrollen, die Rollen 24A und 24B auf. Diese Rollen 24A und 24B können beide angetrieben werden, im Einzelfall könnte es auch genügen, nur eine dieser Rollen anzutreiben. Die zweite Führung 20 kann auf verschiedene Weise gegenüber dem Korpus 12 beweglich sein. Grundsätzlich soll sie in eine erste Position gebracht werden können, bei der die Aufnahme eines Werkstückes leicht möglich ist, und in eine zweite Position gebracht werden können, bei der die Antriebsrollen 24 auf das Werkstück einwirken können. In der gezeigten Ausführungsform ist zu diesem Zweck die Verschwenkung des Gehäuses 22 um eine Schwenkgelenk 26 vorgesehen. Demgemäß ergibt sich eine hochgeklappte Stellung des Gehäuses 22, sowie sie in Fig. 2 gezeigt wird, und eine heruntergeklappte Stellung, die nicht dargestellt ist, sich aber aus der Zeichnung auch erschließt. An der Rückseite des Korpuses 12 ist eine Gasdruckfeder 28 vorgesehen. Diese ist mit dem Korpus 12 und mit dem Gehäuse 22 der zweiten Führung 20 fest verbunden. Durch diese Gasdruckfeder 28 werden die Antriebsrollen 24 in der heruntergeschwenkten Arbeitsposition gegen ein Werkstück gedrückt. Damit ergibt sich ein festerer Kontakt zwischen den Antriebsrollen und dem Werkstück.

Zum besseren Verständnis sind in Fig. 2 zusätzlich die relevanten Achsen eingezeichnet. Dabei bezeichnet A1 die Rotationsachse, um welche ein Werkstück rotiert, wenn es von der ersten Führung 16 geführt wird. Die Achse A2 beschreibt die Achse, um welche die Antriebsrollen 24 der zweiten Führung 20 rotieren. Diese Achse weist eine Schrägstellung gegenüber der Achse A1 auf. Ferner ist die Schwenkachse A3 eingezeichnet, um welche das Gehäuse 22 verschwenkt werden kann.

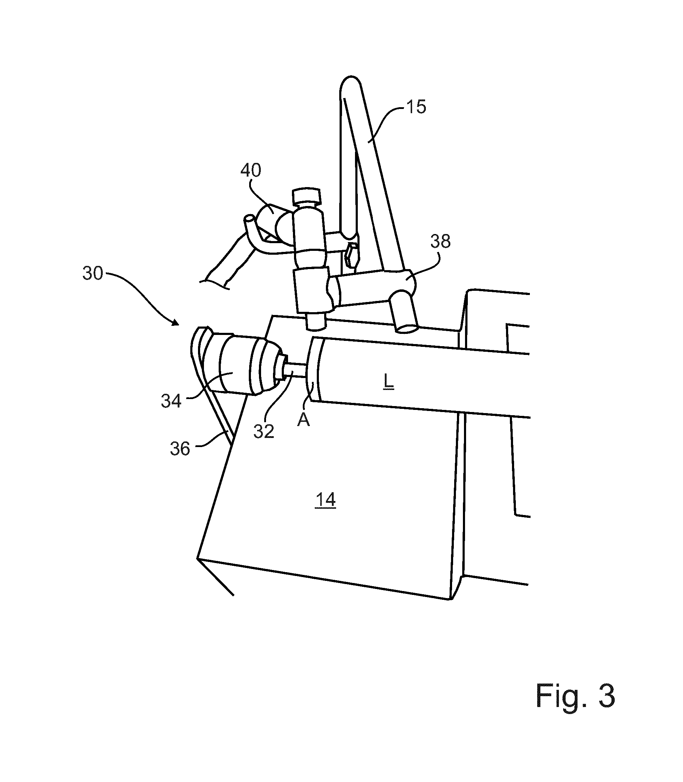

Fig. 3 zeigt Details des Schweißtisches 10 im Bereich der Arbeitsfläche 14. Es handelt sich allerdings nicht um eine Vergrößerung aus Fig. 1, da in dieser Abbildung auch Werkstücke eingezeichnet sind. Es handelt sich um ein Langstück L, also beispielsweise ein Rohr, an dessen linkem Ende ein Anschweißstück A, also beispielsweise ein Deckel oder eine sogenannte Ronde angeschweißt wird. Man erkennt, dass die Werkstücke oberhalb der Arbeitsfläche 14 bearbeitet werden, da das Langstück L auf der (nicht sichtbaren) ersten Führung 16 aufliegt. Das Anschweißstück A wird durch den Spannstempel 30 gestützt. Man erkennt, dass der Spannstempel 30 einen Kontaktstift 32 aufweist, der im mechanischen Kontakt mit dem Anschweißstück A steht. Der Kontaktstift 32 wird durch einen Stifthalter 34 geführt. Der Stifthalter 34 kann den Austausch von Kontaktstiften erlauben. Als Stifthalter 34 ist beispielsweise ein gängiges Bohrfutter zweckmäßig. Der Stifthalter 34 wird seinerseits in einer Haltezunge 36 gehalten. Die Haltezunge 36 ist mit dem Korpus 12 des Schweißtisches 10 verbunden. Die Haltezunge 36 kann einen Langschlitz aufweisen, mit dessen Hilfe der Stifthalter 34 nach oben oder nach unten verschoben werden kann, so dass er eine an die zu bearbeitenden Werkstücke angepasste Höhe über der Arbeitsfläche 14 einnimmt. Die Haltezunge 36 kann elektrisch leitend ausgeführt werden, so dass ein Erdungskabel oder eine Erdungszange mit der Haltezunge 36 oder einem mit ihr verbundenen Kontaktpunkt verbunden werden kann. Wenn die Verbindung zwischen Haltezunge 36 und Stifthalter 34 sowie die Verbindung vom Stifthalter 34 zum Kontaktstift 32 ebenfalls elektrisch leitend ausgeführt ist, so kann auf diese Weise die Erdung eines Werkstückes, also in der gezeigten Situation die Erdung des Anschweißstückes A erreicht werden.

Der Haltearm 15 für ein Schweißgerät ist in mehreren Raumrichtungen beweglich. Dies wird durch (nicht sichtbare) Gelenke und Lager erreicht. Dabei sollen sowohl die Höhe als auch die Winkel verstellt werden können, durch welche eine Schweißpistole auf das Werkstück gerichtet wird. Am Haltearm 15 ist eine Einspannvorrichtung 38 vorgesehen, welche ein Schweißvorrichtung (in der Regel eine Schweißpistole 40) aufnehmen kann.

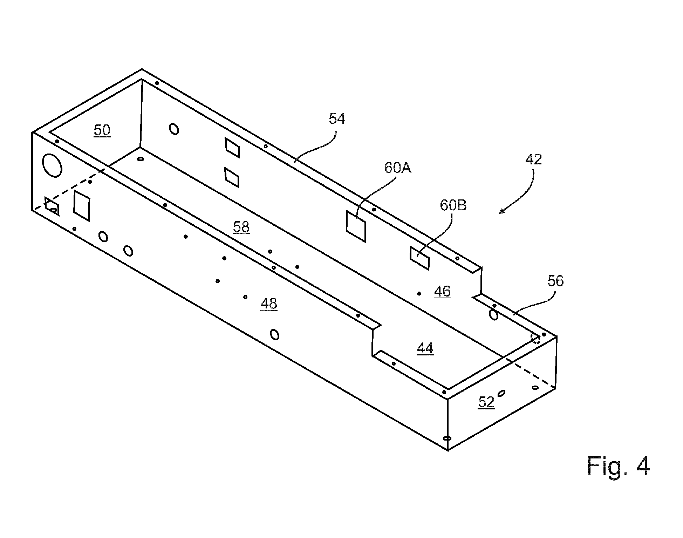

Fig. 4 zeigt in einer Konstruktionsskizze die genauere Form des Korpusgehäuses 42 für einen Schweißtisch 10. Dieser umfasst den Gehäuseboden 44, eine Vorderwand 46, eine Rückwand 48, eine erste Seitenwand 50 und eine zweite Seitenwand 52. An den Oberseiten der Vorderwand 46, der ersten Seitenwand 50 und der Rückwand 48 ist umlaufend eine Auflagelasche für den Hauptteil des Deckels vorgesehen. In diesem Bereich befindet sich die Stützfläche 17. Ferner ist in geringerer Höhe über dem Gehäuseboden 44 umlaufend an der Vorderwand 46, der zweiten Seitenwand 52 und der Rückwand 48 eine Auflagelasche 56 für die Arbeitsfläche 14 vorgesehen. Die Stützfläche 17 und die Arbeitsfläche 14 können in dieser Konstruktion Teile eines einstückigen Deckels sein. Dieser wird nachfolgend noch näher beschrieben. Die Wände bilden insgesamt einen Aufnahmeraum 58 im Korpus 14. In diesem Aufnahmeraum 58 können elektrische und elektronische Elemente vorgesehen sein. Beispielsweise sind solche Elemente vorzusehen, welche die Anzeige- und Bedienelemente unterstützen, für die Ausschnitte 60 vorgesehen sind. Es käme auch in Frage, ein komplettes Schweißgerät in dem Aufnahmeraum 58 unterzubringen.

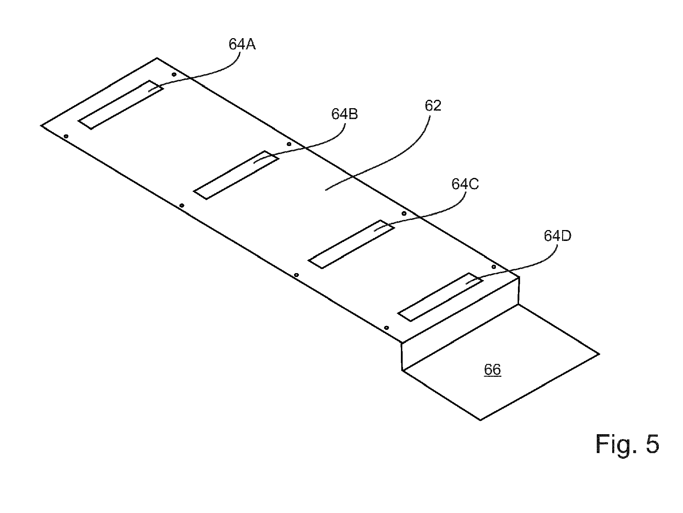

Fig. 5 zeigt einen Deckel 62, der auf das Korpusgehäuse 42 aufgelegt werden kann. Dieser Deckel 62 ist stufenförmig, so dass er einen Deckelabschnitt 66 aufweist, der in der gezeigten Weise eine gegenüber der ersten Führung 16 und ihrer Stützfläche 17 erniedrigte Arbeitsfläche 14 ausbilden kann. Als weitere wesentliche Elemente weist der Deckel 62 Ausschnitte 64A, 64B, 64C und 64D auf, durch welche die Elemente der ersten Führung 16 über den Deckel 62 nach oben herausragen können. Diese Elemente sind in der Ausführungsform der Fig. 1 die Führungsrollen 18. Der Deckel 62 kann durch Bohrungen mit den im Korpusgehäuse 42 vorgesehenen Auflagelaschen 54 und 56 verschraubt werden.

Wenn in der gezeigten Weise im Deckel nur Ausschnitte 64 für die Elemente der ersten Führung 16 vorgesehen sind, so sind im Aufnahmeraum 58 des Korpusgehäuses 42 Tragelemente für die erste Führung 16 vorzusehen. Dies können beispielsweise Elemente sein, die die Achsen der Führungsrollen 18 tragen, und die sich am Boden 44 des Korpusgehäuses 42 abstützen. Alternativ wäre aber auch die Montage von Führungsrollen 18 auf der Oberseite des Deckels 62 denkbar.

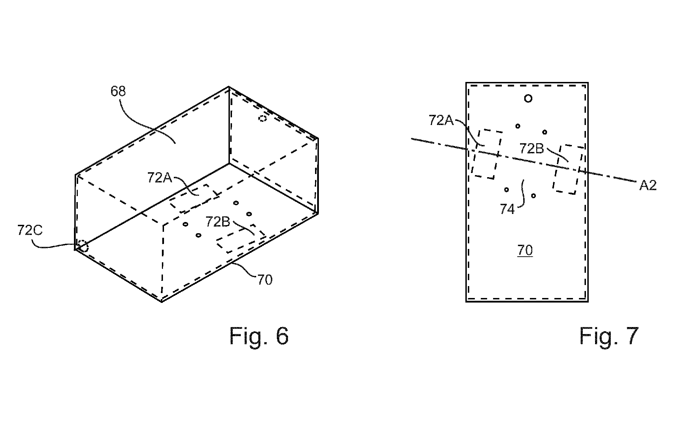

Fig. 6 zeigt in einer Konstruktionsansicht ein leeres Gehäuse 68 für die zweite Führung 20. Wesentliche Elemente der zweiten Führung 20, beispielsweise also Antriebsrollen, sind nicht eingezeichnet. Das Gehäuse 68 weist einen Boden 70 auf, in dem Ausschnitte 72A und 72B vorgesehen sind. Diese Ausschnitte 72A und 72B sind für Antriebsrollen 24 vorgesehen. Ferner wird ein Ausschnitt 72C erkennbar. Durch diesen können Kabel zugeführt werden. Das Gehäuse 68 ist so bemessen, dass ein Motor, beispielsweise ein elektrischer Schrittmotor oder sonstiger Elektromotor, im Gehäuse 68 untergebracht werden kann.

Fig. 7 zeigt in einer Unteransicht den Boden 70 des Gehäuses 68. Die Position der Ausschnitte 72A und 72B ist gut erkennbar. Diese Ausschnitte 72A und 72B sind für eine schräge Anordnung der Rollen relativ zu den Seitenflächen des Gehäuses 68 ausgelegt. Die Achse A2 zeigt an, wie die Drehachse solcher Rollen ausgerichtet sind. Zwischen den Ausschnitten 72A und 72C sind Bohrungen 74 erkennbar. Diese Bohrungen 74 können verwendet werden, um einen Antriebsmotor fest mit dem Gehäuseboden 70 zu verbinden.

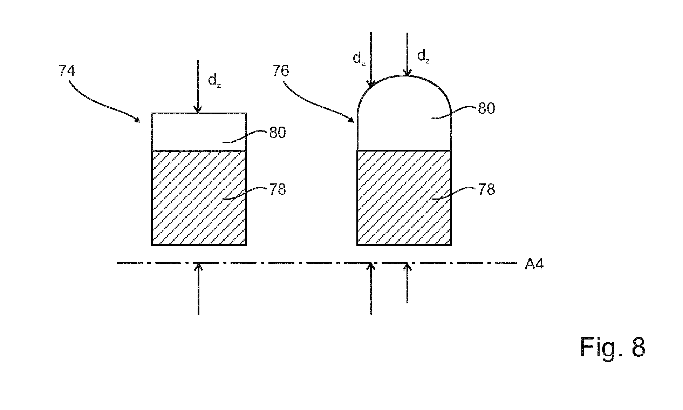

Fig. 8 stellt zweckmäßige Rollen zur Verwendung im Zusammenhang mit der vorliegenden Erfindung dar. Beide Rollen sind in einem Querschnitt gezeichnet, bei dem die Achse A4, um welche sich beide Rollen drehen, in der Papierebene verläuft. Dabei ist auf der linken Seite eine Rolle mit gerader Abrollfläche 74 gezeigt. Rechts daneben ist eine Rolle mit bogenförmiger Abrollfläche 76 gezeigt. Entsprechende Elemente beider Rollen werden mit korrespondierenden Bezugszeichen bezeichnet. Die Rollen verfügen jeweils über eine Nabe oder Felge 78. Die genaue Ausgestaltung ist nicht entscheidend, dieser Teil der Rolle stellt jedoch die Verbindung zwischen Abrollfläche und Achse her. Außen (also achsfern) auf dieser Nabe oder Felge befindet sich ein Kontaktmaterial. Dieses Kontaktmaterial ist bei der Rolle 74 als ringförmiger Wulst mit flachem Profil gestaltet. Damit ergibt sich eine flache Kontaktfläche. Geeignete Kontaktmaterialien 80 sind solche Materialien, welche eine gute Haftung an dem Werkstück sicherstellen, zweckmäßig ist beispielsweise Hartgummi. Die Rolle mit bogenförmiger Abrollfläche 76 verfügt ebenfalls über eine Felge oder ein ähnliches Element, welches die Achse umgibt. Achsfern darauf angeordnet ist das Kontaktmaterial 80, welches in der Zeichenebene, in der auch die Drehachse liegt, bogenförmig verläuft. Dementsprechend gibt es einen zentralen Durchmesser d_{z}, welcher größer ist als mindestens ein äußerer Durchmesser, beispielsweise der eingezeichnete äußere Durchmesser dₐ.

Insgesamt zeigt diese Beschreibung, wie in effektiver Weise ein Schweißtisch geschaffen werden kann, mit dem sehr verschiedene Werkstücke in effektiver Weise bearbeitet werden können.

### Bezugszeichenliste

- 10: Schweißtisch
- 11: Standfüße
- 12: Korpus
- 13: Anzeige- und Bedienelemente
- 14: Arbeitsfläche
- 15: Haltearm für Schweißpistole
- 16: erste Führung
- 17: Stützfläche
- 18: Führungsrollen
- 20: zweite Führung für Werkstück
- 22: Gehäuse
- 24: Antriebsrolle
- 26: Schwenkgelenk
- 28: Gasdruckfeder
- 30: Spannstempel
- 32: Kontaktstift
- 34: Stifthalter
- 36: Haltezunge
- 38: Einspannvorrichtung für Schweißgerät/-pistole
- 40: Schweißpistole
- 42: Korpusgehäuse
- 44: Gehäuseboden
- 46: Vorderwand
- 48: Rückwand
- 50: erste Seitenwand
- 52: zweite Seitenwand
- 54: Auflagelasche für den Hauptteil des Deckels
- 56: Auflagelaschen für die Arbeitsfläche des Deckels
- 58: Aufnahmeraum
- 60: Ausschnitt
- 62: Deckel
- 64: Ausschnitte für erste Führung
- 66: Deckelabschnitt für Arbeitsfläche
- 68: Gehäuse (leer) für zweite Führung
- 70: Boden
- 72: Ausschnitte
- 74: Rolle mit gerader Abrollfläche
- 76: Rolle mit bogenförmiger Abrollfläche
- 78: Felge
- 80: Kontaktmaterial
- d_{z}: zentraler Durchmesser
- dₐ: äußerer Durchmesser
- L: Langstück
- A: Anschweißstück
- A1: Rotationsachse
- A2: Antriebsachse
- A3: Schwenkachse
- A4: Referenzachse

## Patentansprüche

1. Schweißtisch (10) zur Bearbeitung von Langstücken, welche eine Längsachse aufweisen, wobei der Schweißtisch (10) eine erste Führung (16) für Langstücke aufweist, welche das Drehen des Langstückes um eine Rotationsachse, z.B. die Längsachse, erlaubt, und wobei der Schweißtisch (10) ferner eine zweite Führung (20) für Langstücke aufweist, welche einen Anpressdruck auf das Langstück ausübt, **dadurch gekennzeichnet, dass** die erste Führung (16) oder die zweite Führung (20) eine Kraft auf das Langstück ausüben kann, deren eine Komponente senkrecht zur Rotationsachse und tangential in Richtung einer Rotation um die Rotationsachse gerichtet ist und deren andere Komponente parallel zur Rotationsachse gerichtet ist.

2. Schweißtisch (10) nach Anspruch 1, welcher einen Antrieb aufweist, mit dem das Langstück in eine Rotationsbewegung versetzt werden kann.

3. Schweißtisch (10) nach Anspruch 1, welcher an mindestens einer Seite in Verlängerung der Rotationsachse einen Anstoß aufweist.

4. Schweißtisch (10) nach Anspruch 2, bei welchem der Anstoß als Spannstempel mit einem Andruckpunkt auf der Rotationsachse ausgeführt ist.

5. Schweißtisch (10) nach Anspruch 2 oder 3, bei welchem an dem Anstoß eine Erdungseinrichtung vorgesehen ist.

6. Schweißtisch (10) nach einem der vorhergehenden Ansprüche, bei welchem durch den Anpressdruck, welchen die zweite Führung (20) auf das Langstück ausübt, das Langstück gegen die erste Führung (16) gedrückt wird.

7. Schweißtisch (10) nach einem der vorhergehenden Ansprüche, bei dem die erste Führung (16) mindestens ein Paar von Rollen (18) aufweist.

8. Schweißtisch (10) nach einem der vorhergehenden Ansprüche, bei dem die zweite Führung (20) mindestens eine Rolle (24) aufweist.

9. Schweißtisch (10) nach Anspruch 8, bei dem die mindestens eine Rolle (24) eine Drehachse aufweist und diese Drehachse schräg zur Rotationsachse verläuft.

10. Teilautomatisiertes Verfahren zum Verbinden eines Langstückes mit
einem Anschweißstück, welches folgende Schritte umfasst:
- Auflegen des Langstücks auf einen Schweißtisch, vorzugsweise auf Rollen, so dass das Langstück um seine Längsachse drehbar ist
- Manuelles Anlegen des Anschweißstücks an das Langstück
- Anheften des Anschweißstückes, vorzugsweise durch mindestens einen Schweißpunkt mit einem ersten Schweißgerät
- Erden des Langstücks oder des Anschweißstückes
- Fixieren des Anschweißstückes mit einem Spannstempel
- Anlegen mindestens einer Antriebsrolle, welche zwischen einer Ruheposition und einer Arbeitsposition beweglich ist, durch Überführen in die Arbeitsposition
- Ausüben von Druck auf das Langstück durch die Antriebsrolle
- Legen einer Schweißnaht durch Einschalten des ersten oder eines zweiten Schweißgerätes und Rotation des Langstücks und des Anschweißstückes

11. Verfahren nach Anspruch 10, bei welchem als weiterer Schritt das Fixieren des Anschweißstückes mit einem Spannstempel vorgesehen ist.

12. Verfahren nach Anspruch 10 oder 11, bei welchem die Antriebsrolle auch eine Kraft parallel zur Rotationsachse ausübt.

13. Verfahren nach einem der Ansprüche 10 bis 12, bei dem das Anschweißstück geerdet wird.

14. Verfahren nach einem der Ansprüche 10 bis 13, bei dem für das Legen der Schweißnaht die Rotationsgeschwindigkeit und die Schweißzeit unabhängig einstellbar sind.

15. Verfahren nach einem der Ansprüche 10 bis 14, bei welchem eine
automatische Abschaltung des Schweißvorganges vorgesehen ist.
